# EUROPÄISCHE PATENTSCHRIFT

(11) **EP 2 847 106 B1**
(45) Veröffentlichungstag und Bekanntmachung des Hinweises auf die Patenterteilung: **13.07.2016**
(21) Anmeldenummer: 13720912.8
(22) Anmeldetag: 02.05.2013
(51) Int. Cl.: B65G 11/16

(54) **FÖRDERANLAGE MIT EINEM STOSSBSORPTIONSFESTEN VERSCHLEISSSCHUTZ**
CONVEYING INSTALLATION HAVING AN IMPACT ABSORPTION RESISTANT WEAR PROTECTION MEANS
INSTALLATION DE TRANSPORT POURVUE D'UNE PROTECTION CONTRE L'USURE RÉSISTANTE À L'ABSORPTION D'IMPACT

(30) Priorität: 07.05.2012 DE 102012103967
(43) Veröffentlichungstag der Anmeldung: 18.03.2015
(73) Patentinhaber: ContiTech Transportbandsysteme GmbH, 30165 Hannover (DE)
(72) Erfinder: THOMCZYK, Andrea, 37079 Göttingen (DE); KANTOREK, Frank, 31275 Lehrte (DE)
(74) Vertreter: Preusser, Andrea
(86) Internationale Anmeldenummer: PCT/EP2013/059093
(87) Internationale Veröffentlichungsnummer: WO 2013/167446

(56) Entgegenhaltungen:
- EP-A2- 0 213 282
- DE-A1-102010 005 852
- GB-A- 2 405 853
- JP-A- S5 369 377
- JP-A- 2003 160 214
- US-B2- 7 249 442

## Beschreibung

Die Erfindung betrifft eine Förderanlage mit wenigstens einem Fördergurt, sowie ferner mit Tragrollen und mit Traggerüsten, wobei die Förderanlage ein materialförderndes Obertrum mit einer Übergabestelle für das Fördermaterial und ein zumeist materialfreies Untertrum ausbildet. Es gibt allerdings auch Förderanlagen, die zusätzlich im Untertrum beladen werden.

Das Fördergut wird im Rahmen einer Förderanlage an einer Übergabestelle mittels eines Übergabetrichters auf den Fördergurt aufgebracht bzw. geschüttet. Gattungsmäßige Übergabestellen, auch als Aufgabestellen oder Aufgabestationen bezeichnet, sind seit langem bekannt. So werden diese beispielsweise in der gattungsgemäßen DE 10 2010 005 852 A1, oder in DE 2 321 025, DE 1 756 248, DE 697 992, DE 444 099, DD 292 887 A5, DD 254 182 A1, DD 253 234 A1, D 245 177 A1 beschrieben.

Die Übergabestelle enthält häufig wenigstens einen Übergabetrichter. Sie kann allerdings auch als Schurre, Fallrohr, Schütte oder Rutsche ausgebildet sein.
Der Teil der Übergabestelle, welcher sich in direktem Kontakt zum Fördergut befindet, wird meist mit einem Verschleißschutz versehen. Der Verschleißschutz dient unter anderem zur Reduzierung von Beschädigungen der Oberflächen, die häufig, insbesondere bei Übergabetrichtern und Fallrohren, aus Metall bestehen. Das Metall wird dadurch auch vor Korrosion geschützt. Des Weiteren wird durch den Verschleißschutz die Aufprallenergie der geförderten Güter auf der Aufgabestelle absorbiert (Stoßabsorption). Dieser Verschleißschutz besteht zumeist aus einer Kautschukmischung, enthaltend wenigstens eine Kautschukkomponente oder einen Kautschukkomponentenverschnitt, wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente). Bedingt durch die Vulkanisation der Kautschukmischung erfährt der Verschleißschutz die erforderlichen elastischen Eigenschaften.
Diese elastischen Eigenschaften dienen unter anderem zur Absorption der Aufprallenergie (Stoßabsorption) der geförderten Güter. Diese Stoßabsorption, d.h. die Minderung der Aufprallenergie, ist ein wesentliches Merkmal für die Lebensdauer der Aufgabestelle und auch des Fördergurtes.
Im Rahmen einer Weiterentwicklung besteht die Aufgabe der Erfindung darin, eine Förderanlage bereitzustellen, deren Aufgabestelle sich durch eine weitere Verbesserung hinsichtlich der Minderung der Aufprallenergie und der sich daraus ergebenden erhöhten Lebensdauer auszeichnet.

Gelöst wird diese Aufgabe durch die Forderanlage nach Anspruch 1.

Überraschenderweise wurde festgestellt, dass es sich positiv auf die Stoßabsorption auswirkt, wenn der Verschleißschutz wenigstens eine geschäumte Polymermischung enthält. Die weiteren Eigenschaften des Aufgabestelle und damit der gesamten Förderanlage werden dabei nicht negativ beeinträchtigt.
Im Gegenteil, durch das Vorhandensein von wenigstens einer geschäumten Polymermischung ergibt sich eine Gewichtsreduzierung, die sich positiv auf die Kosten auswirkt.
Die begriffe Polymermischung und Kautschukmischung werden synonym verwendet.

Die Erfindung ist grundsätzlich für alle Förderanlagen und Fördergurte geeignet.
Zu nennen sind hier insbesondere Stahlseilfördergurte und Textilfördergurte. Weitere Vorteile der Erfindung zeigen sich vor allem bei Heißfördergurten, die als Stahlseil- oder Textilfördergurte ausgebildet sein können, und hoch temperierte (zumeist > 250°C) Fördergüter befördern müssen.

Erfindungswesentlich ist, dass der Verschleißschutz wenigstens eine geschäumte Polymermischung enthält. Dies bedeutet, dass der Verschleißschutz nur aus wenigstens einer geschäumten Schicht bestehen kann. Es ist aber auch möglich, dass der Verschleißschutz einen schichtförmigen Aufbau besitzt, wobei wenigstens eine Schicht aus wenigstens einer geschäumten Polymermischung besteht. In diesem Fall können die weiteren Schichten aus ungeschäumten Kautschukmischungen aufgebaut sein oder als textile Lage, z. Bsp. aus einem Gewebe, ausgebildet sein.
Ist der Verschleißschutz schichtförmig aufgebaut und wenigstens eine weitere Schicht aus einer ungeschäumten Kautschukmischung vorhanden, so ist die qualitative und / oder quantitative Zusammensetzung der geschäumten Polymermischung, abgesehen von den notwendigen Blähmitteln, hierbei bevorzugt gleich oder verschieden der Zusammensetzungen der ungeschäumten Kautschukmischung(en).
Bei Vorhandensein einer textilen Lage, insbesondere in Form eines Gewebes, ist das Material bevorzugt ausgewählt aus der Gruppe, bestehend aus Baumwolle und / oder Polyamid und / oder Polyester und / oder Aramid und oder Glas und / oder Basalt und / oder Stahl sein. Die genannten Werkstoffe können alleine oder in Form von Hybridgeweben, welche aus wenigstens einem der genannten Werkstoffe aufgebaut sind, eingesetzt werden. Von besonderer Bedeutung ist hier ein Polyamid-Polyester-Gewebe.

In einer besonders bevorzugten Ausführungsform enthält der Verschleißschutz vorzugsweise wenigstens eine Deckplatte an der Oberfläche.
Die Deckplatte kann hierbei als Folie ausgebildet sein, ein Gewebe sein oder aus mindestens einem polymeren Werkstoff aufgebaut sein.
Ist die Deckplatte ist aus jeweils mindestens einem polymeren Werkstoff aufgebaut, so handelt es sich hierbei bevorzugt um einen Kautschuk, der ausgewählt ist aus der Gruppe, bestehend aus bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM) handeln.
Die genannten Kautschuke können hierbei alleine oder im Verschnitt eingesetzt werden.

Handelt es sich bei der Deckplatte um eine Folie oder ein Gewebe, so können hierbei die genannten Werkstoffe ebenso zum Einsatz kommen. Besonders bevorzugt ist es, wenn die Folie auf der Basis wenigstens eines Fluorpolymers aufgebaut ist. In diesem Fall ist eine zusätzliche optimierte Medienbeständigkeit gewährleistet.

Des weiteren kann die Deckplatte neben der Kautschukkomponente wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente) enthalten.

Erfindungswesentlich ist, dass der Verschleißschutz wenigstens eine geschäumte Polymermischung enthält.
Die qualitative und / oder quantitative Zusammensetzung der geschäumten Polymermischung, abgesehen von den notwendigen Blähmitteln, kann hierbei gleich oder verschieden der Zusammensetzung einer vorhandenen Decklage enthaltend einen polymeren Werkstoff sein. In einer besonders bevorzugten Ausführungsform ist die qualitative und / oder quantitative, insbesondere die qualitative, Zusammensetzung, abgesehen von den notwendigen Blähmitteln, gleich der Zusammensetzung der Kautschukmischung der Decklage. Dadurch wird die Komplexität im Produktionsprozess nicht erhöht und es ergeben sich weitere Vorteile hinsichtlich Zeit und Kosten. Es ist ebenso möglich, dass die Deckplatte des Verschleißschutzes aus der geschäumten Polymerschicht besteht.

Der Kautschuk für die geschäumte Polymerschicht ist ausgewählt aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM).
Die genannten Kautschuke können hierbei alleine oder im Verschnitt eingesetzt werden. Des Weiteren kann die geschäumte Polymerschicht wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Alumiumhydroxid, Talk, Kreide, etc. verwendet werden.

Ebenso können alle der fachkundigen Person bekannten weiteren Zusatzstoffe, wie Pigmente, Weichmacher, Ozon- und Alterungsschutzmittel eingesetzt werden.
Die Vulkanisation der geschäumten Schicht erfolgt in der Regel peroxidisch, z.B. wenn EPDM als Kautschukkomponente verwendet wird, oder auch als Schwefelvulkanisation bei Verwendung von NR, BR oder SBR oder auch bisphenolisch bei der Verwendung von bspw. FPM.
Zusätzlich enthält die geschäumte Polymerschicht noch wenigstens ein Blähmittel. Als Blähmittel werden üblicherweise porenbildende Treibgase wie z. B. Azo- und DiazoVerbindungen, bezeichnet, die unter dem Einfluß von Wärme oder Katalysatoren Gase
(z. B. N₂ oder CO₂) abspalten und daher zur Herstellung geschäumter Polymermischungen dienen. Die Blähmittel zersetzen sich hierbei bei einer bestimmten Temperatur während der Verarbeitung unter Gas-Bildung oder bei Zusatz von flüchtigen Lösemitteln während der Polymerisation bzw. Vulkanisation. Die Verschäumung erfolgt dann entweder beim Verlassen des Extrusionswerkzeugs, d. h durch Vulkanisation in einer UHF-(Mikrowellen)-Heissluftanlage oder Spritzgießen, oder in offenen Formen.

Bevorzugt hat sich die Verwendung von Blähmitteln, insbesondere von Blähmitteln auf Basis von wenigstens einem Acrylnitrilpolymer, erhältlich unter anderem unter dem Handelsnamen Expancel^{®}, gezeigt.
Des Weiteren können bei Bedarf noch Schaumstabilisatoren hinzugefügt werden.

Die Erfindung wird nun anhand eines Ausführungsbeispiels unter Bezugnahme auf schematische Zeichnungen erläutert. Die Erfindung ist nicht auf die gezeigten Zeichnungen beschränkt.

Es zeigen:
- Fig. 1: eine Förderanlage mit einem Fördergurt, einer Trommel und Tragrollen;
- Fig. 2: Querschnitt durch einen Verschleißschutz mit einer geschäumten Polymerschicht zwischen Belagsunterseite und Deckplatte
- Fig. 3: Querschnitt durch einen Verschleißschutz mit einer geschäumten Polymerschicht als Deckplatte

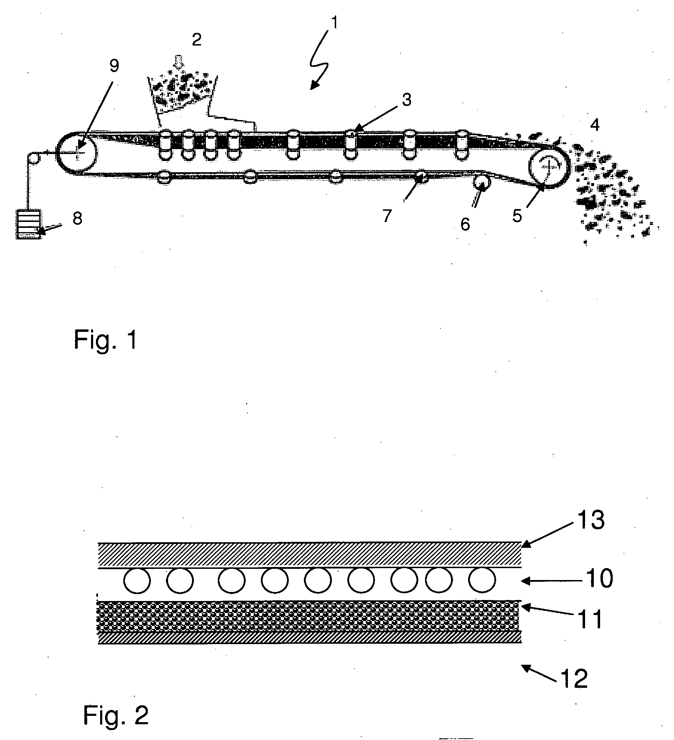

Fig. 1 zeigt eine Förderanlage 1 in Form einer Gurtförderanlage mit einem Fördergurt mit Aufgabestelle 2 und Fördergutabwurf 4. Des Weiteren enthält die Förderanlage Obertrumtragrollen 3, Untertrumtragrollen 7, eine Knicktrommel 6, eine Umkehrtrommel 9 und eine Antriebstrommel 5. Die Aufgabestelle 2 enthält einen Übergabetrichter, der mit einem Verschleißschutz ausgestattet ist, welcher wenigstens eine geschäumte Polymermischung enthält..

Fig. 2 zeigt einen Querschnitt durch einen Verschleißschutz mit einer geschäumten Schicht 10, die sich zwischen Belagunterseite 12 und Deckplatte 13 des Verschleißschutzes befindet, wobei zusätzlich noch eine eingebettete textile Lage 11 vorhanden ist und die zusätzliche geschäumte Schicht 10 in direktem Kontakt zu der textilen Lage 11 und der Deckplatte 13 steht. Die Deckplatte 13 kann hierbei als Folie oder als Kautschukmischung ausgebildet sein Die Belagunterseite 12 des Verschleißschutzes kann hierbei auf der Basis einer Kautschukmischung ausgebildet sein oder aus wenigstens einem Metall bestehen.

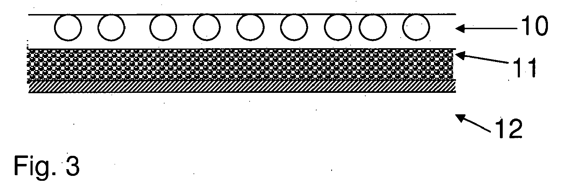

Fig. 3 zeigt einen Querschnitt durch einen Verschleißschutz mit einer geschäumten Schicht 10, die als Deckplatte eines Verschleißschutzes ausgebildet ist. Zwischen Belagunterseite 12 und der geschäumten Schicht 10 befindet sich eine textile Lage 11.

### Bezugszeichenliste

### (Teil der Beschreibung)

- 1: Förderanlage
- 2: Fördergutaufgabe
- 3: Obertrumtragrollen
- 4: Fördergutabwurf
- 5: Antriebstrommel
- 6: Knicktrommel
- 7: Untertrumtragrollen
- 8: Spannvorrichtung
- 9: Umkehrtrommel (Umlenktrommel)
- 10: geschäumte Polymerschicht
- 11: textile Lage
- 12: Belagunterseite des Verschleißschutzes
- 13: Decklage (Deckplatte)

## Patentansprüche

1. Förderanlage (1) mit einem Fördergurt, sowie ferner mit Trommeln (5, 6, 9), Tragrollen (3, 7) und mit Traggerüsten, wobei die Förderanlage ein materialförderndes Obertrum mit einer Übergabestelle für das Fördermaterial (2) und ein zumeist materialfreies Untertrum ausbildet, **dadurch gekennzeichnet, dass** die Übergabestelle (2) wenigstens einen Verschleißschutz enthält, der wenigstens eine geschäumte Polymermischung enthält, wobei die geschäumte Polymermischung EPDM und / oder NR und / oder SBR und / oder NBR und / oder CR und / oder ACM und / oder ECO und / oder CSM und / oder MVQ und / oder FPM enthält.

2. Förderanlage nach Anspruch 1, **dadurch gekennzeichnet, dass** die Übergabestelle (2) wenigstens einen Übergabetrichter enthält, der mit wenigstens einem Verschleißschutz versehen ist, der wenigstens die geschäumte Polymermischung enthält.

3. Förderanlage nach Anspruch 2, **dadurch gekennzeichnet, dass** der Übergabetrichter als Schurre, Fallrohr, Schütte oder Rutsche ausgebildet ist.

## Claims

1. Conveyor (1) with a conveyor belt, and also moreover with drums (5, 6, 9), carrier rollers (3, 7), and carrier frames, where the conveyor forms a material-conveying upper web with a transfer section for the material to be conveyed (2), and a mostly material-free lower web, **characterized in that** the transfer section (2) comprises at least one wear-protection system which comprises at least one foamed polymer mixture, where the foamed polymer mixture comprises EPDM and/or NR and/or SBR and/or NBR and/or CR and/or ACM and/or ECO and/or CSM and/or MVQ and/or FPM.

2. Conveyor according to Claim 1, **characterized in that** the transfer section (2) comprises at least one transfer hopper which has been provided with at least one wear-protection system which comprises at least the foamed polymer mixture.

3. Conveyor according to Claim 2, **characterized in that** the transfer hopper takes the form of chute, downpipe, or slide.

## Revendications

1. Installation de transport (1) munie d'une courroie de transport, ainsi que de tambours (5, 6, 9), de rouleaux porteurs (3, 7) et de châssis supports, l'installation de transport formant compartiment supérieur de transport de matériau comprenant un emplacement de transfert pour le matériau transporté (2) et un compartiment inférieur essentiellement exempt de matériau, **caractérisée en ce que** l'emplacement de transfert (2) contient au moins une protection contre l'usure, qui contient au moins un mélange de polymères moussé, le mélange de polymères moussé contenant de l'EPDM et/ou du NR et/ou du SBR et/ou du NBR et/ou du CR et/ou de l'ACM et/ou de l'ECO et/ou du CSM et/ou du MVQ et/ou du FPM.

2. Installation de transport selon la revendication 1, **caractérisée en ce que** l'emplacement de transfert (2) contient au moins une trémie de transfert, qui est munie d'au moins une protection contre l'usure qui contient au moins le mélange de polymères moussé.

3. Installation de transport selon la revendication 2, **caractérisée en ce que** la trémie de transfert est configurée sous la forme d'une rampe de déchargement, d'un tuyau de descente, d'un déversoir ou d'une glissière.
